# EUROPEAN PATENT SPECIFICATION

(11) **EP 1 717 109 B1**
(45) Date of publication and mention of the grant of the patent: **03.06.2009**
(21) Application number: 06008450.6
(22) Date of filing: 24.04.2006
(51) Int. Cl.: B60R 21/0136

(54) **Vehicle collision detection system**
System zur Kollisionserkennung für Kraftfahrzeug
Système de détection de collision pour véhicule

(30) Priority: 25.04.2005 JP 2005126840
(43) Date of publication of application: 02.11.2006
(73) Proprietor: DENSO CORPORATION, Kariya-city, Aichi-pref. 448-8661 (JP); Hitachi Cable, Ltd., Tokyo 101-8971 (JP)
(72) Inventor: Takafuji, Tetsuya, Kariya-city Aichi-pref., 448-8661 (JP); Kachu, Ryotaro, Toyota-shi, Aichi-ken 471-8571 (JP); Fujita, Koichi, Toyota-shi, Aichi-ken 471-8571 (JP); Kobayashi, Yoji, Tokyo 101-8971 (JP)
(74) Representative: Kuhnen & Wacker

(56) References cited:
- EP-A- 1 535 806
- DE-A1-5102004 014 71
- DE-A1-4102004 060 61
- DE-B- 1 033 732

## Description

The present invention relates to a collision detection system for a vehicle according to claim 1.

From DE 103 33 732 B3 a collision detection system for a vehicle is known which comprises a first member that is disposed at a front part of a vehicle body, the first member transferring or/and absorbing rearward a collision load applied when a vehicle collision occurs. Moreover, a second member is disposed behind the first member in a vehicle front-rear direction and a collision sensor is disposed between the first member and the second member and detects a vehicle collision. One of the collision sensor and the first member has a recess portion and the other one thereof has a projected portion on which the recess portion is snap-locked.

To protect occupants against major accidents, such as vehicle collision with another vehicle, vehicles mounted with passenger protection devices (air bags, seat belt pretensioners) have been recently increased. An air bag system inflates an air bag (bag body) to prevent an occupant being hit against an instrument panel or the like when a vehicle collision occurs. To inflate an air bag without fail when a collision occurs, it is indispensable to detect the vehicle collision with accuracy. For this purpose, collision detection systems including collision sensors have been developed.

Hood mechanisms and air bags have also been developed for protecting a pedestrian in collision between a vehicle and the pedestrian. Collision detection systems are also required to actuate these safety devices in a vehicle collision.

For example, in the front body structures of vehicles in the prior art (refer to JP-8-108862A), collision load, applied to the front extremity (bumper) of a vehicle when a vehicle collision occurs, is transferred to collision sensors disposed at a distance slightly behind the bumper at the forward end. The collision sensors are constructed of load sensors, for example, and detect load applied to a specific part of a vehicle body in a collision. To transfer load applied to the bumper to the collision sensors disposed behind, a cross member is fixed on a part of a floor panel, and the collision sensors are mounted to this cross member.

Technologies in the prior art are susceptible to improvement in the operation of attaching collision sensors, such as load sensors, to a bumper. More specific description will be given. The collision sensors are fixed on a bumper with fastening tools, such as bolts, or bonded to a bumper by using a bonding means, such as a double-faced adhesive tape or adhesive. In this case, it takes much time and work to install the collision sensors to a bumper. In addition, there is a possibility that the collision sensors may be damaged with a fastening tool, or adhesive may stick to the collision sensors during installation work.

Long optical fiber sensors disposed at the front part of a vehicle body in the direction of vehicle width may be used as vehicle collision sensors. When a vehicle hits against another vehicle, a pedestrian or the like, a part of the optical fibers disposed in front is deformed, and a part of light transmitted therethrough is lost in the deformed portion. A collision is detected by utilizing this phenomenon. Also in this case, the situation does not change. When the long optical fiber sensors are bonded to their mounting member (e.g. bumper reinforcement), the same problem as with the above-mentioned collision sensors, such as load sensors, causes.

The present invention has been made with the foregoing taken into account.

An object of the present invention is to provide a vehicle collision detection system in which a collision sensor for detecting a collision with a vehicle, a pedestrian or the like can be mounted to a mounting member with ease and reliability.

According to the present invention this object is solved by the features of claim 1.

Improved embodiments of the inventive collision detection system for a vehicle result from the sub-claims.

According to an aspect of the present invention, a collision detecting system includes: a first member (25, 40, 50) that is disposed at a front part of a vehicle body for transferring or/and absorbing rearward a collision load (F) applied when a vehicle collision occurs; a second member (20, 55) disposed behind the first member in a vehicle front-rear direction, and a collision sensor (30, 45, 60, 100) that is disposed between the first member (25, 40, 50) and the second member (20, 55) and detects a vehicle collision. In this system, the collision sensor (30, 45, 60, 100) is mounted to the first member (25, 40, 50) by a snap lock. Accordingly, the collision sensor can be easily accurately mounted in the front part of the vehicle body.

For example, the first member is a load transferring member (25) that is disposed at the front part of the vehicle body and transfers rearward a collision load (F) applied when a vehicle collision occurs, the second member is a reinforcing member (20) disposed behind the load transferring member (25). In this case, the collision sensor (30, 100) is disposed between the load transferring member (25) and the reinforcing member (20) to detect a vehicle collision, and the collision sensor is mounted to the load transferring member (25) by the snap lock. Accordingly, without using fastening means or bonding means, the collision sensor can be easily mounted to the load transferring member, and collision load can be transferred from the load transferring member to the collision sensor without fail. As a result, a vehicle collision can be detected without fail.

Furthermore, a plurality of the collision sensors (30, 100) can be disposed at a distance in the direction of a vehicle height between the load transferring member (25) and the reinforcing member (20). In this case, the collision sensors (30, 100) have recess portions (33, 107), respectively, and the load transferring member (25) has a plurality of projected portions (27) on which the recess portions (33, 107) are snap-locked, and the load transferring member (25) is extended astride the collision sensors (30, 100). Therefore, the collision sensors can accurately detect a vehicle collision. Furthermore, the rims of the recess portions can be made elastically deformable. In this case, the recess portions can be easily snap-locked on the projected portions.

Alternatively, the first member is an energy absorbing member (40) that is disposed at a front part of a vehicle body and absorbs impact energy when a vehicle collision occurs, and the second member is a reinforcing member (20) disposed behind the energy absorbing member (40). In this case, the collision sensor (45) is disposed between the energy absorbing member (40) and the reinforcing member (20) to detect a vehicle collision, and the collision sensor (45) is mounted to the energy absorbing member (40) by a snap lock.

Even in this case, a plurality of the collision sensors (45) can be disposed at a distance in the direction of a vehicle height. In this case, each of the collision sensors (45) has a recess portion (46), the energy absorbing member (40) has a plurality of projected portions (41) on which the recess portions (46) are respectively snap-locked, and the energy absorbing member (40) is extended astride the plurality of the collision sensors (45).

Alternatively, the first member is a bumper (50) that is disposed at the front part of the vehicle body, and the second member is an energy absorbing member (55) that is disposed behind the bumper (50) and absorbs impact energy when a vehicle collision occurs. Furthermore, the collision sensor (60) is disposed between the bumper (50) and the energy absorbing member (55) to detect a vehicle collision, and the collision sensor (45) is mounted to the bumper (50) by a snap lock.

Even in this case, a plurality of the collision sensors (60) can be disposed at a distance in the direction of a vehicle height. In this case, each of the collision sensors (60) includes a recess portion (61), the bumper has a plurality of projected portions (51) on which the recess portions (61) are snap-locked, respectively, and the bumper (50) is extended astride the plurality of the collision sensors (60).

The collision sensor may be a mechanical sensor or an optical sensor that includes an optical fiber.

Additional objects and advantages of the present invention will be more readily apparent from the following detailed description of preferred embodiments when taken together with the accompanying drawings, in which:
FIG. 1 is a schematic sectional view illustrating a collision detection system according to a first embodiment of the present invention;
FIG. 2A and FIG. 2B are enlarged sectional views showing a load sensor before an assembly and after the assembly;
FIG. 3 is a schematic sectional View illustrating a collision detection system according to a second embodiment of the present invention;
FIG. 4 is a schematic sectional view illustrating a collision detection system according to a third embodiment of the present invention;
FIGS. 5A, 5B and 5C are sectional views illustrating modifications to the first to third embodiments, each showing a projected portion and recess portion before and after an assembly;
FIG. 6A is a schematic transverse view illustrating a collision detection system, and FIG. 6B is a sectional view taken along the line VIB-VIB in FIG. 6A, according to a fourth embodiment of the present invention; and
FIG. 7A is a schematic sectional view illustrating the relation between an optical fiber sensor, a light emitting element, and a light-sensitive element in the fourth embodiment, and FIG. 7B is a schematic drawing illustrating the operation of the fourth embodiment when a load F is applied.

Hereinafter, embodiments of the present invention will be now described with reference to the drawings.

### (First Embodiment)

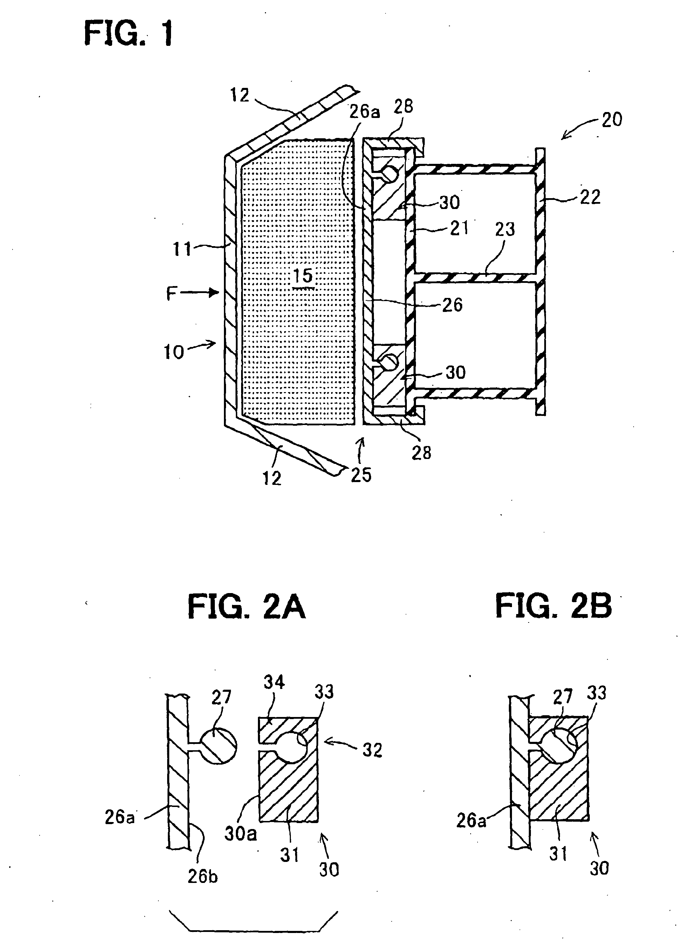

FIG. 1 is a longitudinal sectional view of an anterior part (front part) of a vehicle. A bumper 10 is placed at the forward end, and is extended in the direction of vehicle width (the direction perpendicular to the plane of FIG. 1). The bumper 10 includes a straight portion 11 located in the center in the direction of vehicle height (the vertical direction in FIG. 1) and a pair of bent portions 12 located at the upper and lower ends. A bumper absorber (energy absorbing member) 15 is placed behind the bumper 10 (on the right side in FIG. 1). The bumper absorber 15 is formed of readily deformable metal in the shape of block. The bumper absorber 15 has predetermined dimensions in the direction of vehicle width, the longitudinal direction of the vehicle, and the direction of vehicle height, A bumper reinforcement (reinforcing member) 20 is placed behind the bumper absorber 15. The bumper reinforcement 20 is formed of metal high in rigidity. The bumper reinforcement 20 includes a forward portion 21 and a backward portion 22 away from each other in the longitudinal direction of the vehicle, and multiple coupling portions 23 that are away from one another in the vertical direction and couple together the forward portion 21 and the backward portion 22. The height of the bumper reinforcement 20 is slightly smaller than the height of the bumper absorber 15.

A load transferring member 25 and a pair of load sensors (collision sensors) 30 are placed between the bumper absorber 15 and the bumper reinforcement 20. The load transferring member 25 is formed of resin or metal high in rigidity, and includes a main body 26 extended in the direction of vehicle height and a pair of folded portions 28 located at the upper and lower ends of the main body. The height of the main body 26 is substantially equal to the height of the bumper absorber 15. The ends of a pair of the folded portions 28 are engaged with both the ends of the forward portion 21 of the bumper reinforcement 20. A pair of the load sensors 30 are disposed away from each other in the direction of vehicle height between the load transferring member 25 and the bumper reinforcement 20. In this state, the load sensors 30 are mounted to the load transferring member 25.

More detailed description will be given. As illustrated in FIG. 1 and FIG. 2B, a pair of spherical projected portions 27 protruded rearward are formed on the rear face 26b of the main body 26 of the load transferring member 25 at the upper and lower end portions 26a. Each load sensor 30 includes a sensor part (detection part) 31 and an installation part 32. The sensors 30, each of which has the sensor part 31 and the installation part 32 are so formed that they are away from each other in the direction (the vertical direction in FIG. 2A) perpendicular to the direction in which collision load is applied (the horizontal direction in FIG. 2A). The sensor part 31 includes a strain gage or the like. The installation part 32 has a spherical recess portion 33, whose inside diameter is selected so that it is slightly smaller than the outside diameter of the spherical projected portion 27. The rims of the spherical recess portions 33 are elastically deformable in the direction in which the openings are widened. As illustrated in FIG. 1 and FIG. 2B, a pair of the load sensors 30 are mounted to the load transferring member 25 such that their front faces 30a are brought into tight contact with the rear face 26b of the main body 26 of the load transferring member 25 at the upper and lower end portions 26a; their spherical recess portions 33 are snap-locked on the spherical projected portions 27.

Description will be given to the action and effect of the collision detection system. When a vehicle collides with another vehicle, a pedestrian, or the like, collision load F acting toward the rearward of the vehicle is applied to the bumper 10. The bumper absorber 15 is deformed under the collision load F mainly in the direction of the length of the vehicle to absorb impact energy. The collision load F is transferred from the bumper absorber 15 to the bumper reinforcement 20 through the load transferring member 25 and the load sensors 30. The bumper reinforcement 20 prevents deformation in the load transferring member 25 and damage to the load sensors 30. The detection parts 31 of the load sensors 30 detect the load transferred from the load transferring member 25 to the bumper reinforcement 20. Based on their signals, a collision detection unit (not show) detects the collision.

With the collision detection system, the following effects are obtained. First, the installation of a pair of the load sensors 30 on the load transferring member 25 is facilitated. The spherical recess portions 33 in the installation parts 32 of the load sensors 30 only have to be snap-locked on the spherical projected portions 27 on the load transferring member 25. When the spherical projected portions 27 are inserted into the spherical recess portions 33, rims 34 of the recess portions 33 are elastically opened to facilitate insertion, Since screw cramping and bonding are unnecessary as mentioned above, the time and effort required to install the load sensors 30 on the load transferring member 25 is reduced.

Second, a pair of the load sensors 30 are mounted to the load transferring member 25 with reliability. The spherical recess portions 33 in the load sensors 30 are snap-locked on the spherical projected portions 27 on the load transferring member 25. Thus, the rims 34 of the spherical recess portions 33 are elastically closed and get engaged with the spherical surfaces of the spherical projected portions 27. Therefore, they are not easily disengaged even when vibration is applied to the vehicle body. In third, a pair of upper and lower load sensors 30 are provided so that they are away from each other in the vertical direction. Therefore, even when collision load is insufficiently or unreliably detected by either load sensor 30 for some reason, the collision load can be detected by the other load sensor 30.

Furthermore, the detection parts 31 and the installation parts 32 are formed away from each other in the direction perpendicular to the direction in which collision load F is applied. Therefore, both detection and installation are carried out with reliability. In addition, the load transferring member 25 is located between the bumper absorber 15 and the bumper reinforcement 20. Therefore, collision load F applied to the bumper absorber 15 is transferred to the load sensor 30 through the load transferring member 25 without fail.

### (Second Embodiment)

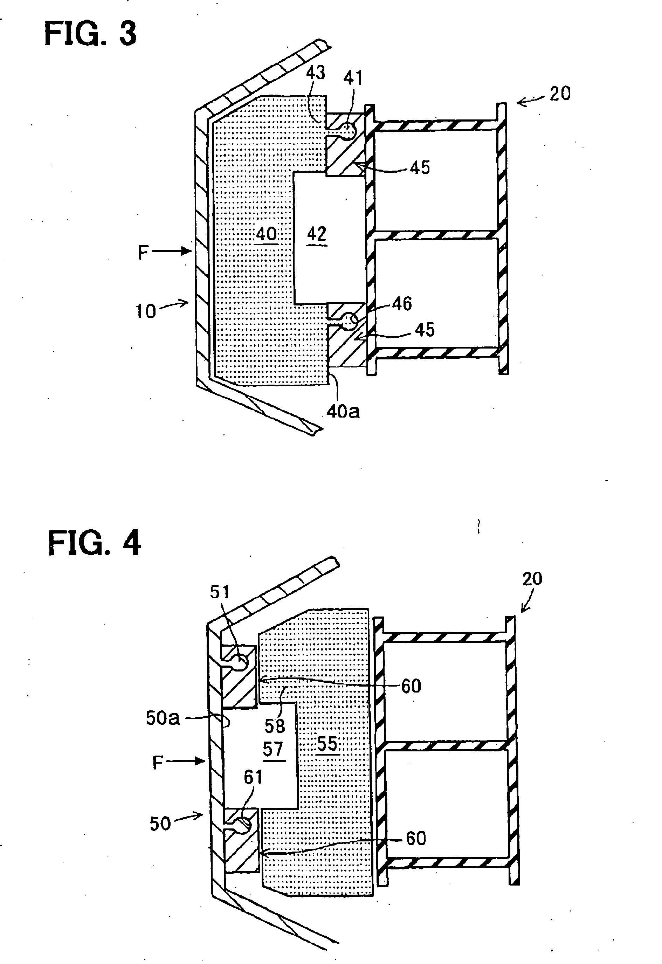

In the second embodiment illustrated in FIG. 3, the load transferring member 25 in the first embodiment is eliminated, and a bumper reinforcement 20 is placed behind a bumper absorber 40. A pair of load sensors 45 are placed between the bumper absorber 40 and the bumper reinforcement 20, and are mounted to the bumper absorber 40. More specific description will be given. A cutout portion 42 (recess) is formed in the middle part of the rear face 40a of the bumper absorber 40 in the direction of vehicle height. A pair of spherical projected portions 41 are formed on a pair of upper and lower protruded portions 43 that are formed away from each other in the direction of vehicle height and protruded rearward. The same load sensors 45 as the load sensors 30 in the first embodiment (Refer to FIG. 2.) are mounted to a pair of the spherical projected portions 41 on the bumper absorber 40. That is, the spherical recess portions 46 in the load sensors 45 are snap-locked on a pair of the spherical projected portions 41. The other constructions are the same as in the first embodiment.

Advantages of the second embodiment will be now described. Because the spherical recess portions 46 in the load sensors 45 can be snap-locked on the spherical projected portions 41 on the bumper absorber 40, the load sensors 45 can be mounted to the bumper absorber 40 with ease and reliability. Although the load transferring member 25 in the first embodiment is eliminated, the cutout portion 42 is formed in the bumper absorber 40, and the load sensors 45 are placed between a pair of the upper and lower protruded portions 43 and the bumper reinforcement 20. Therefore, collision load is transferred from the bumper absorber 40 to the load sensors 45 without fail.

### (Third Embodiment)

In the third embodiment illustrated in FIG. 4, the load transferring member 25 in the first embodiment is eliminated. A bumper absorber 55 is placed behind a bumper 50. The bumper absorber 55 has a cutout portion 57 (recess) formed in the middle part of its front face in the direction of vehicle height. The bumper absorber 55 has a pair of upper and lower protruded portions 58 that are formed away from each other in the direction of vehicle height and are protruded frontward. A bumper reinforcement 20 is placed behind the bumper absorber 55. A pair of the same load sensors 60 as the load sensors 30 in the first embodiment (Refer to FIG. 2A and 2B) are placed between the rear face 50a of the bumper 50 and a pair of the protruded portions 58 on the bumper absorber 55. The load sensors 60 are mounted to the bumper 50.

More specific description will be given. A pair of spherical projected portions 51 that are away from each other in the direction of vehicle height and are protruded rearward are formed on the rear face 50a of the bumper 50. The spherical recess portions 61 in the load sensors 60 as the load sensors 30 in the first embodiment are snap-locked on the spherical projected portions 51. The other constructions are the same as in the first embodiment.

According to the third embodiment, the spherical recess portions 61 in the load sensors 60 can be easily snap-locked on the spherical projected portions 51 on the bumper 50, and the load sensors 60 can be mounted to the bumper 50 with ease and reliability. A cutout portion 57 is formed in the middle part of the front face of the bumper absorber 55 in the direction of vehicle height, and protruded portions 58 are formed at the upper and lower ends. Therefore, load applied to the bumper 50 is transferred to the load sensors 60 placed immediately behind the bumper without fail.

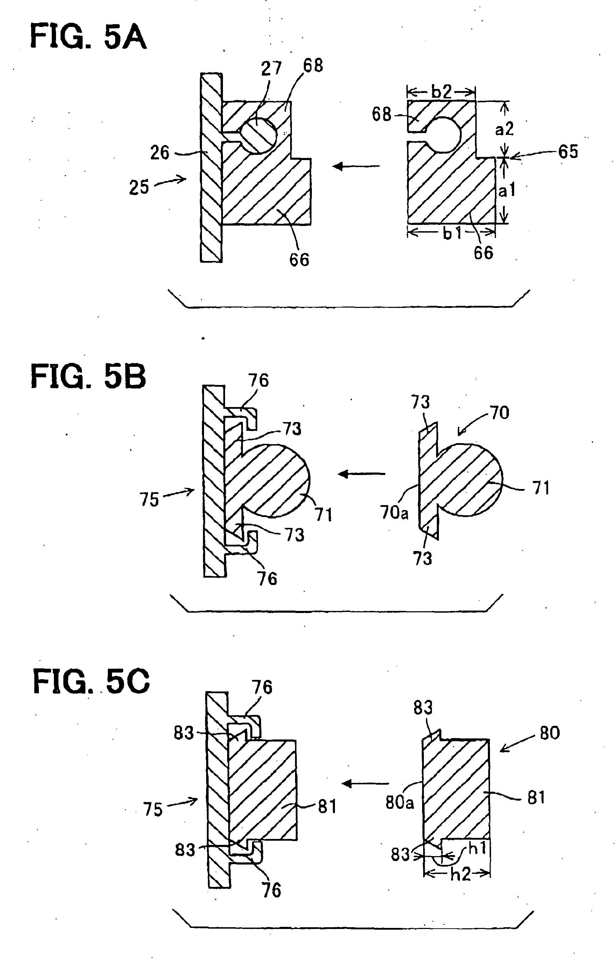

The engagement part in a load sensor (collision sensor) of the collision detection system according to the above-described first to third embodiments can be changed as shown in FIGS. 5A to 5C.

FIG. 5A to FIG. 5C illustrate modifications to the installation of the load sensor to a mounting member (installation part). In a first modification illustrated in FIG. 5A, the width b1 and height a1 of the detection part 66 of a load sensor 65, located on the lower side in the direction of vehicle height, are larger than the width b2 and height a2 of the installation part 68, located on the upper side. This dimensional relation brings the following advantages; first, collision load is applied from the load transferring member 25 to the detection part 68 without fail, and a collision is detected with reliability. Second, the installation part 68 is less prone to be damaged, and thus the load sensor 65 is less prone to come off from the mounting member, such as the load transferring member 25.

In a second modification illustrated in FIG. 5B, a spherical detection part 71 is formed in the center of each load sensor 70. An annular installation part 73 is formed around the detection part 71 on its mounting face 70a side. The annular hook portions 76 of the load transferring member 75 are so formed that they have L-shaped cross sections in correspondence with the foregoing. The annular hook portions are engaged with the installation parts 73 of the load sensors 70. As a result, the detection parts 71 are protruded high from the hook portions 76 toward the rearward of the vehicle. This makes collision load easily detected by the detection parts 71 and the hook portions 76 and the installation parts 73 less prone to be damaged. The installation parts 73 of the load sensors 70 may be formed of a pair of protrusions, and the hook portions 76 on the load transferring member 75 may be formed of a pair of hooks.

In a third modification illustrated in FIG. 5C, a block detection part 81 is formed in the center of each load sensor 80, and an annular installation part 83 is formed around the detection part 81 on its mounting face 80a side. The height h2 from the mounting face 80a to the end of the detection part 81 is so selected that it is fairly larger than the height h1 from the mounting face 80a to the surface of the installation part 83. As a result, the detection parts 81 are protruded rearward so that they are higher than the hook portions 76. Thus, the detection parts 81 easily detect a collision load, and the hook portions 76 and the installation parts 83 are less prone to be damaged.

### (Fourth Embodiment)

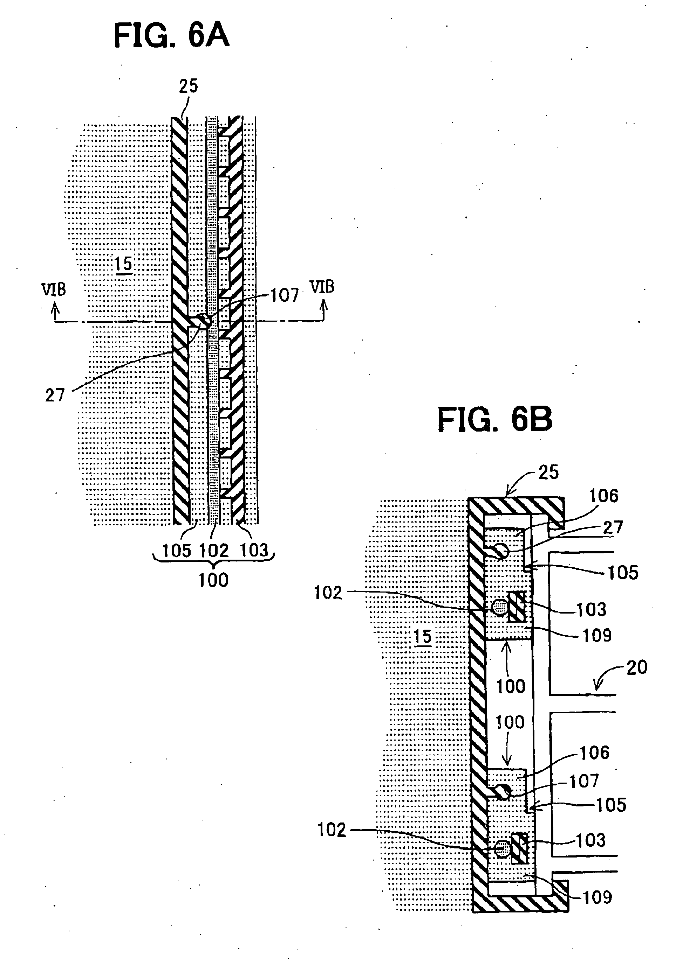

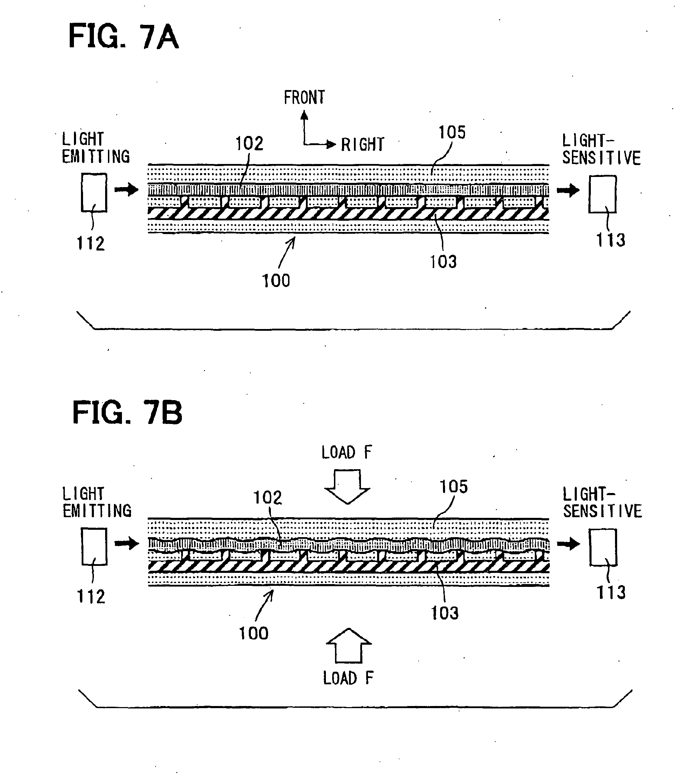

In the fourth embodiment illustrated in FIGS. 6A and 6B and FIGS. 7A and 7B, collision sensors are comprised of optical fiber sensors 100. FIG, 6A is a transverse sectional view of part of a vehicle body, and FIG. 6B is a longitudinal sectional view taken along line VIB-VIB of FIG. 6A. In FIGS. 6A and 6B, an energy absorbing member 15, a load transferring member 25, and a bumper reinforcement 20 are disposed in this order from the front end to the rear end of the vehicle. Two optical fiber sensors 100 away from each other in the direction of vehicle height are placed between the load transferring member 25 and the bumper reinforcement 20 throughout the overall length in the direction of vehicle width.

The individual optical fiber sensors 100 include an optical fiber 102, a bending member 103 located in proximity to the optical fiber 102, and a case 105 located outside the optical fiber 102 and the bending member 103. The cases 105 are made of rubber and have rectangular transverse sections. A spherical recess portion 107 opened forward is formed in the installation part 106 in each case 105, located in proximity to the top. The optical fiber 102 and the bending member 103 are housed in the detection part 109 in each case, located in proximity to the bottom. The optical fiber sensors 100 are snap-locked on the load transferring member 25 at two points at a distance in the direction of vehicle height at one or more points at a distance in the direction of the length of the cases 105. More specific description will be given. Two spherical projected portions 27 protruded rearward are formed on the rear face of the load transferring member 25 so that they are away from each other in the direction of vehicle height. These spherical projected portions 27 are snap-locked into the spherical recess portions 107, and the optical fiber sensors 100 are thereby mounted to the load transferring member 25. The front faces of the installation parts 106 and the detection parts 109 in the cases 105 are abutted against the rear face of the load transferring member 25, and the rear faces of the detection parts 109 are abutted against the front face of the bumper reinforcement 20.

As illustrated in FIG. 7A, a light emitting element 112 placed on one side of a vehicle body is positioned in proximity to one end of each optical fiber sensor 100, and a light-sensitive element 113 placed on one side of the vehicle body is positioned in proximity to the other end of the optical fiber sensor 100. As a result, light emitted from the light emitting element 112 is conveyed through the interior of the optical fiber 102, and is received by the light-sensitive element 113. When a vehicle collision occurs, force F in the direction orthogonal to the direction of the axis of the optical fiber sensor 100 is applied to the sensor, as illustrated in FIG. 7B. The optical fiber 102 is bent, and a part of the light passing through its interior is lost in the bent portion. As a result, the amount of light received by the light-sensitive element 113 becomes lower than the amount of light emitted from the light emitting element 112. Therefore, a collision can be detected by detecting the amount of light received by the light-sensitive element 113.

According to the fourth embodiment, the optical fiber sensors 105 can be mounted to the load transferring member 25 just by snap-locking the spherical projected portions 27 into the spherical recess portions 107. The mounting of the optical fiber sensors 105 can be carried out with ease and reliability. The optical fiber sensors 105 are extended throughout the overall length in the direction of vehicle width. Therefore, collisions can be detected without fail wherever in the direction of their length is deformed, that is, no matter what portion at the anterior part of a vehicle collides.

Although the present invention has been described in connection with some preferred embodiments thereof with reference to the accompanying drawings, it is to be noted that various changes and modifications will become apparent to those skilled in the art.

For example, as the collision sensors used for the above-described embodiments of the present invention, mechanical or optical sensors can be used. The mechanical collision sensors are constructed of, for example, load sensors. In this case, the load sensors are placed in a transferring part of a collision load that is constructed of the bumper, the energy absorbing member, the reinforcing member, the load transferring member, or the like. The mechanical collision sensors are preferably so formed that detection parts for detecting a collision and installation parts mounted to a mounting member are away from each other in the direction perpendicular to the direction in which a collision load is applied. A strain gage (foil gage or semiconductor gage) is stuck to the surface of the individual detection parts. When external force is applied, the strain gage is deformed and this produces strain. Its electrical resistance is varied according to the magnitude of the strain. Change in resistance is amplified through an amplifier circuit and converted into voltage. This voltage is compared with a reference value to determine the presence or absence of a collision.

Alternatively, the optical collision sensors may be constructed of, for example, long optical fiber sensors, and disposed in the direction of the left and right of the vehicle body (the direction of vehicle width). The optical fiber sensor includes an optical fiber, a bending member located in proximity to the optical fiber, and a case located outside the optical fiber and the bending member. A detection part that houses an optical fiber and detects a collision and an installation part mounted to the mounting member are formed in the individual cases. It is preferable that the detection part and the installation part should be formed at a distance in the direction perpendicular to the direction in which collision load is applied. It is preferable that the rims of the recess portions in the installation parts should be elastically deformable in the direction of expansion. When a vehicle collision occurs, the optical fibers are deformed, and a part of light emitted from light emitting elements is lost in the deformed portion. Therefore, the vehicle collision can be detected by detecting the quantity of light that passes therethrough with a light sensitive element.

Alternatively, both the mechanical collision sensors and the optical collision sensors can be mounted to a mounting member by snap locks. What is used as the mounting member differs depending on the place of installation of the collision sensors.

Furthermore, the mechanical or optical collision sensors can be suitably mounted at a suitable position. For example; the mechanical or optical collision sensors can be mounted to a load transferring member, an energy absorbing member, or a bumper of the vehicle. Even when collision load of the same magnitude is applied to a vehicle body, the magnitude or waveform of detected load can differ according to difference in the place of installation of the sensors or the path of load transfer in the vehicle body. With respect to threshold for collision detection, therefore, consideration should be preferably given to the place of installation of collision sensors.

In the above-described embodiments, the mechanical collision sensors or the optical collision sensors are mounted to a mounting member (installation part) by snap locks. Snap locks, in which a projected portion and a recess portion are combined together or in which a claw portion (hook portion) is utilized, can be suitably used. In case of the combination of the projected portion and the recess portion, a recess portion may be formed in each of multiple collision sensors, and multiple projected portions are formed on a mounting member such as the load transferring member. However, multiple recess portions may be formed in the mounting member, and a projected portion may be formed on each of multiple collision sensors.

In the above-described embodiments, both the projected portions and the recess portions are preferably spherical; however, the present invention is not limited to this construction. Instead of forming multiple projected portions on a mounting member, a long projected line extended in the direction of the left and right of the vehicle (the direction of vehicle width) may be formed. In this case, the recess portions in collision sensors are opened on both sides in the direction of width. In cases where a claw portion (hook portion) is utilized, for example, annular hooks having L-shaped cross sections may be formed on the mounting member, and an annular engagement portion to be engaged with the hook may be formed on each collision sensor.

The collision detection system according to the above-described embodiments is disposed at the anterior part (front part) of a vehicle. In general, the body of the front part is constructed of a left side member, a right side member, and multiple cross members that couple them together. The left side member, right side member, and cross members are required to have rigidity sufficient to endure load repeatedly applied during running or the like; and deformability that make it possible for the members to deform under impact applied in a collision and absorb impact energy.

For this purpose, a bumper, an energy absorbing member, a reinforcing member, and the like are often disposed in this order from forward to backward at the front part. A load transferring member may be disposed between the energy absorbing member and the reinforcing member as required. There are no special constraints on the shape or extending direction of the bumper, energy absorbing member, reinforcing member, or load transferring member.

The mechanical or optical collision sensors can be mounted to a mounting member at the front part of the vehicle body. In cases where the place of collision sensor installation is the area between the load transferring member and the reinforcing member located behind it, the load transferring member is used as the mounting member. In cases where the place of collision sensor installation is the area between the energy absorbing member and the reinforcing member located behind it, the energy absorbing member is used as the mounting member. In cases where the place of collision sensor installation is the area between the bumper and the energy absorbing member located behind it, the bumper is used as the mounting member. Even when collision load of the same magnitude is applied to a vehicle body, the magnitude or waveform of detected load can differ according to difference in the place of installation of load sensors or the path of load transfer in the vehicle body. With respect to threshold for collision detection, therefore, consideration should be preferably given to the place of installation of collision sensors.

Such changes and modifications are to be understood as being within the scope of the present invention as defined by the appended claims.

## Claims

1. A collision detection system for a vehicle comprising:
a first member (25, 40, 50) that is disposed at a front part of a vehicle body, the first member (25, 40, 50) transferring or/and absorbing rearward a collision load (F) applied when a vehicle collision occurs;
a second member (20, 55) disposed behind the first member in a vehicle front-rear direction; and
a collision sensor (30, 45, 60, 100) that is disposed between the first member (25, 40, 50) and the second member (20, 55) and detects a vehicle collision,
wherein one of the collision sensor (30, 45, 60, 100) and the first member (25, 40, 50) has a recess portion and the other one thereof has a projected portion on which the recess portion is snap-locked, wherein
the collision sensor (30, 45, 60, 100) includes an installation part (106) having the recess portion or the projecting portion that is engaged with the load transferring member (25) of the first member (25, 40, 50) by the snap lock, and a detection part (109) for detecting a vehicle collision; **characterized in that**
both the installation part (106) and the detection part (109) abut on a rear face of the load transferring member (25).

2. The collision detection system according to claim 1, wherein:
a plurality of the collision sensors (30, 45, 60, 100) are disposed at a distance in the direction of a vehicle height between the first and second members;
the collision sensors have recess portions (33, 46, 66, 107), respectively;
the first member has a plurality of projected portions (27, 41, 51) on which the recess portions are snap-locked; and
the first member is extended along an arrangement direction of the collision sensors.

3. The collision detection system according to claim 1, wherein:
the first member is a load transferring member (25) that is disposed at the front part of the vehicle body and transfers rearward the collision load (F) applied when a vehicle collision occurs;
the second member is a reinforcing member (20) disposed behind the load transferring member (25); and
the collision sensor (30, 100) is disposed between the load transferring member (25) and the reinforcing member (20) and detects a vehicle collision,
wherein the collision sensor is mounted to the load transferring member (25) through the installation part (106) by the snap lock.

4. The collision detection system according to claim 3, wherein:
a plurality of the collision sensors (30, 100) are disposed at a distance in the direction of a vehicle height between the load transferring member (25) and the reinforcing member (20);
the collision sensors (30, 100) have recess portions (33, 107), respectively; and the load transferring member (25) has a plurality of projected portions (27) on which the recess portions (33, 107) of the installation part (106) are snap-locked; and
the load transferring member (25) is extended astride the collision sensors (30, 100).

5. The collision detection system according to claim 4, wherein:
each of the collision sensors (30, 100) has a detection part (31, 109) for detecting a vehicle collision, and the installation part (32, 106) mounted to the load transferring member (25) and has the recess portion (33, 107) therein; and
the recess portions have rims elastically deformable in the installation part (32, 106).

6. The collision detection system according to claim 1, wherein:
the first member is an energy absorbing member (40) that is disposed at the front part of the vehicle body and absorbs impact energy when a vehicle collision occurs;
the second member is a reinforcing member (20) disposed behind the energy absorbing member (40); and
the collision sensor (45) is disposed between the energy absorbing member (40)
and the reinforcing member (20) and detects a vehicle collision,
wherein the collision sensor (45) is mounted to the energy absorbing member (40) by the snap lock.

7. The collision detection system according to claim 6, wherein:
a plurality of the collision sensors (45) are disposed at a distance in the direction of a vehicle height;
each of the collision sensors (45) has a recess portion (46);
the energy absorbing member (40) has a plurality of projected portions (41) on which the recess portions (46) are respectively snap-locked; and
the energy absorbing member (40) is extended astride the plurality of the collision sensors (45).

8. The collision detection system according to claim 7, wherein:
each of the collision sensors (45) includes a detection part for detecting a collision and an installation part that is mounted to the energy absorbing member and has the recess portions formed therein; and
the recess portions have rims elastically deformable in the installation parts.

9. A collision detection system according to claim 1, wherein:
the first member is a bumper (50) that is disposed at the front part of the vehicle body;
the second member is an energy absorbing member (55) that is disposed behind the bumper (50) and absorbs impact energy when a vehicle collision occurs; and
the collision sensor (60) is disposed between the bumper (50) and the energy absorbing member (55) and detects a vehicle collision,
wherein the collision sensor (45) is mounted to the bumper (50) by the snap lock.

10. The collision detection system according to claim 9, wherein:
a plurality of the collision sensors (60) are disposed at a distance in the direction of a vehicle height;
each of the collision sensors (60) includes a recess portion (61);
the bumper has a plurality of projected portions (51) on which the recess portions (61) are snap-locked, respectively; and
the bumper (50) is extended astride the plurality of the collision sensors (60).

11. The collision detection system according to claim 10, wherein:
each of the collision sensors (60) includes a detection part for detecting a collision, and an installation part that is mounted to the bumper and has the recess portions; and
the recess portions have rims elastically deformable in the installation parts.

12. The collision detection system according to any of claim 1 to claim 10 wherein:
the collision sensor is an optical sensor that includes an optical fiber (102), a bending member (103) located in proximity to the optical fiber (102), and a case (105) located outside the optical fiber (102) and the bending member (103); and
the recess portion (107) is snap-locked on projected portion (27) formed on the load transferring member, the energy absorbing member, or the bumper.

13. The collision detection system according to any one of claims 1 to 10, wherein the collision sensor is an optical sensor or a mechanical sensor.

14. The collision detection system according to any one of claims 3 to 5, further comprising a bumper portion (12); and
a bumper absorber (15) that is located at a front side of the first member between the bumper and the first member.

15. The collision detection system according to claim 1, wherein both the installation part (106) and the detection part (109) abut on the same rear face of the load transferring member (25) extending from a top end to a bottom end in a vehicle height direction; and
the installation part (106) and the detection part (109) are arranged in the vehicle height direction.

## Patentansprüche

1. Kollisionserfassungssystem für ein Fahrzeug, aufweisend:
ein erstes Element (25, 40, 50), das an einem vorderen Teil einer Fahrzeugkarosserie angeordnet ist, wobei das erste Element (25, 40, 50) eine Kollisionslast (F), die aufgebracht wird, wenn es zu einer Fahrzeugkollision kommt, nach hinten überträgt und/oder absorbiert;
ein zweites Element (20, 55), das in Front/Heck-Richtung des Fahrzeugs hinter dem ersten Element angeordnet ist; und
einen Kollisionssensor (30, 45, 60, 100), der zwischen dem ersten Element (25, 40, 50) und dem zweiten Element (20, 55) angeordnet ist und eine Fahrzeugkollision erfasst,
wobei entweder der Kollisionssensor (30, 45, 60, 100) oder das erste Element (25, 40, 50) einen Aussparungsabschnitt aufweist und der bzw. das jeweils andere von beiden einen Vorsprungsabschnitt aufweist, mit dem der Aussparungsabschnitt durch Einschnappen verbunden wird, wobei
der Kollisionssensor (30, 45, 60, 100) einen Installationsteil (106) mit dem Aussparungsabschnitt oder dem Vorsprungsabschnitt, der mit dem Lastübertragungselement (25) des ersten Elements (25, 40, 50) durch Einschnappen verbunden wird, und einen Erfassungsteil (109) zum Erfassen einer Fahrzeugkollision aufweist,
**dadurch gekennzeichnet, dass**
sowohl der Installationsteil (106) als auch der Erfassungsteil (109) an einer rückseitigen Fläche des Lastübertragungselements (25) anliegen.

2. Kollisionserfassungssystem nach Anspruch 1, wobei:
eine Vielzahl der Kollisionssensoren (30, 45, 60, 100) mit einem Abstand in Richtung einer Fahrzeughöhe zwischen den ersten und zweiten Elementen angeordnet sind;
die Kollisionssensoren jeweils Aussparungsabschnitte (33, 46, 66, 107) aufweisen;
das erste Element eine Vielzahl von Vorsprungsabschnitten (27, 41, 51) aufweist, mit denen die Aussparungsabschnitte durch Einschnappen verbunden werden; und
das erste Element sich in einer Anordnungsrichtung der Kollisionssensoren erstreckt.

3. Kollisionserfassungssystem nach Anspruch 1, wobei:
das erste Element ein Lastübertragungselement (25) ist, das am vorderen Teil der Fahrzeugkarosserie angeordnet ist und die Kollisionslast (F), die bei einer Fahrzeugkollision angelegt wird, nach hinten überträgt;
das zweite Element ein Verstärkungselement (20) ist, das hinter dem Lastübertragungselement (25) angeordnet ist; und
der Kollisionssensor (30, 100) zwischen dem Lastübertragungselement (25) und dem Verstärkungselement (20) angeordnet ist und eine Fahrzeugkollision erfasst,
wobei der Kollisionssensor durch die Schnappverbindung über den Installationsteil (106) am Lastübertragungselement (25) angebaut ist.

4. Kollisionserfassungssystem nach Anspruch 3, wobei:
eine Vielzahl der Kollisionssensoren (30, 100) mit einem Abstand in Richtung einer Fahrzeughöhe zwischen dem Lastübertragungselement (25) und dem Verstärkungselement (20) angeordnet sind;
die Kollisionssensoren (30, 100) jeweils Aussparungsabschnitte (33, 107) aufweisen; und
das Lastübertragungselement (25) eine Vielzahl von Vorsprungsabschnitten (27) aufweist, mit denen die Aussparungsabschnitte (33, 107) des Installationsteils (106) durch Einschnappen verbunden werden; und
das Lastübertragungselement (15) sich sattelartig über den Kollisionssensoren (30, 100) erstreckt.

5. Kollisionserfassungssystem nach Anspruch 4, wobei:
jeder der Kollisionssensoren (30, 100) einen Erfassungsteil (31, 109) zum Erfassen einer Fahrzeugkollision und den Installationsteil (32, 106), der am Lastübertragungselement (25) angebaut ist und in dem der Aussparungsabschnitt (33, 107) ausgebildet ist, aufweist; und
die Aussparungsabschnitte Ränder aufweisen, die im Installationsteil (32, 106) elastisch verformbar sind.

6. Kollisionserfassungssystem nach Anspruch 1, wobei:
das erste Element ein Energieabsorptionselement (40) ist, das am vorderen Teil der Fahrzeugkarosserie angeordnet ist und Aufprallenergie absorbiert, wenn es zu einer Fahrzeugkollision kommt;
das zweite Element ein Verstärkungselement (20) ist, das hinter dem Energieabsorptionselement (40) angeordnet ist; und
der Kollisionssensor (45) zwischen dem Energieabsorptionselement (40) und dem Verstärkungselement (20) angeordnet ist und eine Fahrzeugkollision erfasst,
wobei der Kollisionssensor (45) durch die Schnappverbindung über den Installationsteil (106) am Energieabsorptionselement (40) angebaut ist.

7. Kollisionserfassungssystem nach Anspruch 6, wobei:
eine Vielzahl der Kollisionssensoren (45) mit einem Abstand in Richtung einer Fahrzeughöhe angeordnet sind;
jeder der Kollisionssensoren (45) einen Aussparungsabschnitt (46) aufweist;
das Energieabsorptionselement (40) eine Vielzahl von Vorsprungsabschnitten (41) aufweist, mit denen die Aussparungsabschnitte (46) jeweils schnappverbunden sind; und wobei
das Energieabsorptionselement (40) sich sattelartig über der Vielzahl von Kollisionssensoren (45) erstreckt.

8. Kollisionserfassungssystem nach Anspruch 7, wobei:
jeder der Kollisionssensoren (45) einen Erfassungsteil (31, 109) zum Erfassen einer Kollision und einen am Energieabsorptionselement angebauten Installationsteil, in dem die Aussparungsabschnitte ausgebildet sind, aufweist; und wobei
die Aussparungsabschnitte Ränder aufweisen, die in den Installationsteilen elastisch verformbar sind.

9. Kollisionserfassungssystem nach Anspruch 1, wobei:
das erste Element ein Stoßdämpfer (50) ist, der am vorderen Teil der Fahrzeugkarosserie angeordnet ist;
das zweite Element ein Energieabsorptionselement (55) ist, das hinter dem Stoßdämpfer (50) angeordnet ist und Aufprallenergie absorbiert, wenn es zu einer Fahrzeugkollision kommt; und
der Kollisionssensor (60) zwischen dem Stoßdämpfer (50) und dem Energieabsorptionselement (55) angeordnet ist und eine Fahrzeugkollision erfasst,
wobei der Kollisionssensor (45) durch die Schnappverbindung am Stoßdämpfer (50) angebaut ist.

10. Kollisionserfassungssystem nach Anspruch 9, wobei:
eine Vielzahl der Kollisionssensoren (60) mit einem Abstand in Richtung einer Fahrzeughöhe angeordnet sind;
jeder der Kollisionssensoren (60) einen Aussparungsabschnitt (61) aufweist;
der Stoßdämpfer eine Vielzahl von Vorsprungsabschnitten (51) aufweist, mit denen die Aussparungsabschnitte (61) jeweils schnappverbunden sind; und wobei
der Stoßdämpfer (60) sich sattelartig über der Vielzahl von Kollisionssensoren (60) erstreckt.

11. Kollisionserfassungssystem nach Anspruch 10, wobei:
jeder der Kollisionssensoren (60) einen Erfassungsteil zum Erfassen einer Kollision und einen am Stoßdämpfer angebauten Installationsteil, in dem die Aussparungsabschnitte ausgebildet sind, aufweist; und wobei
die Aussparungsabschnitte Ränder aufweisen, die im Installationsteil elastisch verformbar sind.

12. Kollisionserfassungssystem nach Anspruch 1 bis Anspruch 10, wobei
der Kollisionssensor ein optischer Sensor ist, der eine optische Faser (102), ein Biegeelement (103), das sich nahe an der optischen Faser (102) befindet, und ein Gehäuse (105), das sich außerhalb der optischen Faser (102) und des Biegeelements (103) befindet, aufweist; und
der Aussparungsabschnitt (107) mit einem Vorsprungsabschnitt (27), der am Lastübertragungselement, am Energieabsorptionselement oder am Stoßdämpfer ausgebildet ist, durch Einschnappen verbunden wird.

13. Kollisionserfassungssystem nach einem der Ansprüche 1 bis 10, wobei der Kollisionssensor ein optischer Sensor oder ein mechanischer Sensor ist.

14. Kollisionserfassungssystem nach einem der Ansprüche 3 bis 5, ferner einen Stoßdämpferabschnitt (12) aufweisend und
einen Stoßdämpferabsorber (15), der sich an einer vorderen Seite des ersten Elements zwischen dem Stoßdämpfer und dem ersten Element befindet.

15. Kollisionserfassungssystem nach Anspruch 1, wobei sowohl der Installationsteil (106) als auch der Erfassungsteil (109) an der gleichen rückseitigen Fläche des Lastübertragungselements (25) anliegen, das sich in Fahrzeughöhenrichtung von einem oberen Ende zu einem unteren Ende erstreckt; und wobei
der Installationsteil (106) und der Erfassungsteil (109) in Fahrzeughöhenrichtung angeordnet sind.

## Revendications

1. Système de détection de collision pour un véhicule comprenant:
un premier élément (25, 40, 50) qui est disposé au niveau d'une partie avant d'une carrosserie du véhicule, le premier élément (25, 40, 50) transférant ou/et absorbant vers l'arrière une charge (F) de collision appliquée lorsqu'une collision du véhicule se produit;
un deuxième élément (20, 55) disposé derrière le premier élément dans une direction avant-arrière du véhicule; et
un capteur de collision (30, 45, 60, 100) qui est disposé entre le premier élément (25, 40, 50) et le deuxième élément (20, 55) et qui détecte une collision du véhicule,
dans lequel l'un du capteur de collision (30, 45, 60, 100) et du premier élément (25, 40, 50) possède une portion en évidement et l'autre parmi ceux-ci possède une portion projetée sur laquelle la portion en évidement est verrouillée par encliquetage, où
le capteur de collision (30, 45, 60, 100) comprend une partie d'installation (106) ayant la portion en évidement ou la portion de projection qui est engagée avec l'élément (25) de transfert de charge du premier élément (25, 40, 50) par le verrouillage par encliquetage, et une partie de détection (109) pour détecter une collision du véhicule; **caractérisé en ce que**
la partie d'installation (106) et la partie de détection (109) sont toutes deux en butée contre une face arrière de l'élément (25) de transfert de charge.

2. Système de détection de collision selon la revendication 1, dans lequel:
plusieurs capteurs de collision (30, 45, 60, 100) sont disposés à une distance dans la direction d'une hauteur du véhicule entre les premier et deuxième éléments;
les capteurs de collision ont des portions en évidement (33, 46, 66, 107), respectivement;
le premier élément possède plusieurs portions projetées (27, 41, 51) sur lesquelles les portions en évidement sont verrouillées par encliquetage; et
le premier élément est étendu le long d'une direction d'agencement des capteurs de collision.

3. Système de détection de collision selon la revendication 1, dans lequel:
le premier élément est un élément (25) de transfert de charge qui est disposé au niveau de la partie avant de la carrosserie du véhicule et qui transfère vers l'arrière la charge (F) de collision appliquée lorsqu'une collision du véhicule se produit;
le deuxième élément est un élément de renforcement (20) disposé derrière l'élément (25) de transfert de charge; et
le capteur de collision (30, 100) est disposé entre l'élément (25) de transfert de charge et l'élément de renforcement (20) et détecte une collision du véhicule,
dans lequel le capteur de collision est monté sur l'élément (25) de transfert de charge à travers la partie d'installation (106) par le verrouillage par encliquetage.

4. Système de détection de collision selon la revendication 3, dans lequel:
plusieurs capteurs de collision (30, 100) sont disposés à une distance dans la direction d'une hauteur du véhicule entre l'élément (25) de transfert de charge et l'élément de renforcement (20);
les capteurs de collision (30, 100) possèdent des portions en évidement (33, 107), respectivement, et l'élément (25) de transfert de charge possède plusieurs portions projetées (27) sur lesquelles les portions en évidement (33, 107) de la partie d'installation (106) sont verrouillées par encliquetage; et
l'élément (25) de transfert de charge est étendu à califourchon sur les capteurs de collision (30, 100).

5. Système de détection de collision selon la revendication 4, dans lequel :
chacun des capteurs de collision (30, 100) possède une partie de détection (31, 109) pour détecter une collision du véhicule, et de la partie d'installation (32, 106) montée sur l'élément (25) de transfert de charge et a la portion en évidement (33, 107) qui y est formée; et
les portions en évidement possèdent des jantes élastiquement déformables dans la partie d'installation (32, 106).

6. Système de détection de collision selon la revendication 1, dans lequel :
le premier élément est un élément (40) d'absorption d'énergie qui est disposé au niveau de la partie avant de la carrosserie du véhicule et qui absorbe une énergie de choc lorsqu'une collision du véhicule se produit;
le deuxième élément est un élément (20) de renforcement disposé derrière l'élément (40) d'absorption d'énergie; et
le capteur de collision (45) est disposé entre l'élément (40) d'absorption d'énergie et l'élément (20) de renforcement et détecte une collision du véhicule,
dans lequel le capteur de collision (45) est monté sur l'élément (40) d'absorption d'énergie par le verrouillage par encliquetage.

7. Système de détection de collision selon la revendication 6, dans lequel:
plusieurs capteurs de collision (45) sont disposés à une distance dans la direction d'une hauteur du véhicule;
chacun des capteurs de collision (45) possède une portion en évidement (46);
l'élément (40) d'absorption d'énergie possède plusieurs portions projetées (41) sur lesquelles les portions en évidement (46) sont respectivement verrouillées par encliquetage; et
l'élément (40) d'absorption d'énergie est étendu à califourchon sur les nombreux capteurs de collision (45).

8. Système de détection de collision selon la revendication 7, dans lequel :
chacun des capteurs de collision (45) comprend une partie de détection pour détecter une collision et une partie d'installation qui est montée sur l'élément d'absorption d'énergie et possède de portions en évidement qui y sont formées; et
les portions en évidement possèdent des jantes élastiquement déformables dans les parties d'installation.

9. Système de détection de collision selon la revendication 1, dans lequel:
le premier élément est un pare-chocs (50) qui est disposé au niveau de la partie avant de la carrosserie du véhicule;
le deuxième élément est un élément (55) d'absorption d'énergie qui est disposé derrière le pare-chocs (50) et qui absorbe l'énergie de choc lorsqu'une collision du véhicule se produit; et
le capteur de collision (60) est disposé entre le pare-chocs (50) et l'élément (55) d'absorption d'énergie et détecte une collision du véhicule,
dans lequel le capteur de collision (45) est monté sur le pare-chocs (50) par le verrouillage par encliquetage.

10. Système de détection de collision selon la revendication 9, dans lequel:
plusieurs capteurs de collision (60) sont disposés à une distance dans la direction d'une hauteur du véhicule;
chacun des capteurs de collision (60) comprend une portion en évidement (61);
le pare-chocs dispose de plusieurs portions projetées (51) sur lesquelles les portions en évidement (61) sont verrouillées par encliquetage, respectivement; et
le pare-chocs (50) est étendu à califourchon sur les nombreux capteurs de collision (60).

11. Système de détection de collision selon la revendication 10, dans lequel:
chacun des capteurs de collision (60) comprend une partie de détection pour détecter une collision, et une partie d'installation qui est montée sur le pare-chocs et dispose des portions en évidement; et
les portions en évidement possèdent des jantes élastiquement déformables dans les parties d'installation.

12. Système de détection de collision selon l'une des revendications 1 à 10, dans lequel:
le capteur de collision est un capteur optique qui comprend une fibre optique (102), un élément de flexion (103) situé à proximité de la fibre optique (102), et un boîtier (105) situé en dehors de la fibre optique (102) et de l'élément de flexion (103); et
la portion en évidement (107) est verrouillée par encliquetage sur la portion projetée (27) formée sur l'élément de transfert de charge, l'élément d'absorption d'énergie, ou le pare-chocs.

13. Système de détection de collision selon l'une quelconque des revendications 1 à 10, dans lequel le capteur de collision est un capteur optique ou un capteur mécanique.

14. Système de détection de collision selon l'une quelconque des revendications 3 à 5, comprenant en plus une portion (12) de pare-chocs; et
un absorbeur (15) de pare-chocs qui est situé à un côté avant du premier élément entre le pare-chocs et le premier élément.

15. Système de détection de collision selon la revendication 1, dans lequel :
la partie d'installation (106) et la partie de détection (109) sont toutes deux en butée contre la même face arrière de l'élément (25) de transfert de charge s'étendant depuis une extrémité supérieure vers une extrémité inférieure dans une direction de la hauteur du véhicule; et
la partie d'installation (106) et la partie de détection (109) sont agencées dans la direction de la hauteur du véhicule.
